# EUROPEAN PATENT APPLICATION

(11) **EP 4 524 427 A1**
(43) Date of publication of application: **19.03.2025**
(21) Application number: 23196703.5
(22) Date of filing: 12.09.2023
(51) Int. Cl.: F16H 3/54, B60K 1/00

(54) **A TRANSMISSION ARRANGEMENT FOR A VEHICLE, A POWERTRAIN, AND A VEHICLE**

(71) Applicant: VOLVO TRUCK CORPORATION, 405 08 Göteborg (SE)
(72) Inventor: FOLKESSON, Johan, 511 62 Skene (SE)
(74) Representative: Valea AB

(57) **Abstract**

The disclosure relates to a transmission arrangement (1) for a vehicle (100), comprising:
- an input gear assembly (2) comprising an input gearwheel (21) rotationally connected to a body portion (24) of the input gear assembly (2), wherein the input gearwheel (21) is configured to be drivingly connected to a power unit (12),
- a differential gearset (3) configured to be drivingly connected to drive wheels (101),
- a planetary gearset (4) comprising a first planetary gear member (41), a second planetary gear member (42) and a third planetary gear member (43), and
- at least one gear engaging member (51, 52) configured to provide at least two selectable gear ratios of the transmission arrangement (1). A powertrain (10) and a vehicle (100) is also disclosed.

## Description

### TECHNICAL FIELD

The disclosure relates generally to transmission arrangements. In particular aspects, the disclosure relates to a transmission arrangement for a vehicle, a powertrain, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A powertrain for a vehicle may comprise a power unit which is drivingly connected to at least one pair of drive wheels via a transmission. The transmission is typically configured to provide two or more different speed ratios between the power unit and the at least one pair drive wheels. A differential gearset may further be used to allow drive wheels of the at least one pair of drive wheels to rotate with different rotational speeds.

The power unit, such as a power unit for a heavy-duty vehicle, may be an internal combustion engine, such as a diesel engine. However, in recent years, there has been a trend towards developing powertrains with at least one electric power unit, i.e., with at least one electric motor for driving the at least one pair of drive wheels.

In view of the above, there is a strive to develop improved technology relating to transmissions for powertrains, such as for electric powertrains.

### SUMMARY

According to a first aspect of the disclosure, a transmission arrangement for a vehicle according to claim 1 is provided. Thus, there is provided a transmission arrangement for a vehicle, comprising:
- an input gear assembly comprising an input gearwheel rotationally connected to a body portion of the input gear assembly, wherein the input gearwheel is configured to be drivingly connected to a power unit,
- a differential gearset configured to be drivingly connected to drive wheels,
- a planetary gearset comprising a first planetary gear member, a second planetary gear member and a third planetary gear member, and
- at least one gear engaging member configured to provide at least two selectable gear ratios of the transmission arrangement,
wherein
the input gear assembly, the differential gearset and the planetary gearset are coaxially arranged and configured to rotate with respect to a common rotational axis,
the input gear assembly is drivingly connectable to the planetary gearset via the at least one gear engaging member,
the planetary gearset is drivingly connected to the differential gearset, and the input gear assembly is suspended by bearings provided on opposite sides of the differential gearset, as seen along the common rotational axis. The first aspect of the disclosure may seek to provide a compact and efficient transmission arrangement for a vehicle. A technical benefit may include that by the configuration of the transmission arrangement, where the input gear assembly is suspended by bearings provided on opposite sides of the differential gearset, high bending stiffness is achieved for the input gear assembly, while also allowing a compact transmission configuration with at least two selectable gear ratios.

Optionally in some examples, including in at least one preferred example, the bearings are further provided on opposite sides of the planetary gearset, as seen along the common rotational axis. A technical benefit may include a further compact and/or efficient transmission arrangement.

Optionally in some examples, including in at least one preferred example, the planetary gearset and the differential gearset are provided inside the body portion of the input gear assembly. A technical benefit may include a further compact and/or efficient transmission arrangement.

Optionally in some examples, including in at least one preferred example, the at least one gear engaging member is configured to be provided in at least two different states, comprising a first state where it engages the input gear assembly with an associated planetary gear member of the planetary gearset and a second state where it engages the associated planetary gear member with a fixed member. A technical benefit may include that at least two beneficial gear stages are achieved.

Optionally in some examples, including in at least one preferred example, the transmission arrangement comprises a first gear engaging member and a second gear engaging member configured to provide three selectable gear ratios of the transmission arrangement. A technical benefit may include that at least three beneficial gear stages are achieved.

Optionally in some examples, including in at least one preferred example, the first gear engaging member is configured to be provided in at least two different states, comprising a first state where it engages the input gear assembly with the first planetary gear member and a second state where it engages the first planetary gear member with a fixed member, and/or wherein the second gear engaging member is configured to be provided in at least two different states, comprising a first state where it engages the input gear assembly with the third planetary gear member and a second state where it engages the third planetary gear member with a fixed member. A technical benefit may include that at least three beneficial gear stages are achieved.

Optionally in some examples, including in at least one preferred example, the three selectable gear ratios are provided by selectively:
1) engaging the first planetary gear member with the input gear assembly by the first gear engaging member and engaging the third planetary gear member with the fixed member by the second gear engaging member,
2) engaging the third planetary gear member with the input gear assembly by the second gear engaging member and engaging the first planetary gear member with the fixed member by the first gear engaging member, and
3) engaging the first planetary gear member with the input gear assembly by the first gear engaging member and engaging the third planetary gear member with the input gear assembly by the second gear engaging member.
A technical benefit may include that at least three beneficial gear stages with different gear ratios, or speed ratios, are achieved. For example, the first gear ratio may be a first speed reduction, the second gear ratio may be a second speed reduction and the third gear ratio may be a direct 1:1 speed ratio.

Optionally in some examples, including in at least one preferred example, the transmission arrangement is configured to prevent the first and second gear engaging members from being simultaneously engaged to the fixed member. A technical benefit may include that any unintentional locking of the transmission arrangement can be avoided.

Optionally in some examples, including in at least one preferred example, the first and second gear engaging members are provided on opposite sides of the differential gearset and/or of the planetary gear set, as seen along the common rotational axis. A technical benefit may include a further compact and/or efficient transmission arrangement.

Optionally in some examples, including in at least one preferred example, the differential gearset comprises a differential gearset planetary carrier, wherein the differential gearset planetary carrier is rotationally connected to the second planetary gear member.

Optionally in some examples, including in at least one preferred example, the differential gearset planetary carrier and the second planetary gear member are formed as one single integral part. A technical benefit may include a more cost-effective and/or robust configuration.

Optionally in some examples, including in at least one preferred example, the second planetary gear member is a planetary carrier of the planetary gearset. The planetary carrier of the planetary gearset carries one or more planetary gearwheels.

Optionally in some examples, including in at least one preferred example, the first planetary gear member is a sun gearwheel of the planetary gearset.

Optionally in some examples, including in at least one preferred example, the third planetary gear member is a ring gearwheel of the planetary gearset.

Optionally in some examples, including in at least one preferred example, the input gearwheel is a separate member releasably attached to the body portion of the input gear assembly or integrated with the body portion of the input gear assembly. A technical benefit of a separate member releasably attached to the body portion may include a flexible configuration, e.g. allowing input gearwheels of different size to be attached to the body portion. A technical benefit of integrating the input gearwheel with the body portion may include a cost-effective and robust configuration.

Optionally in some examples, including in at least one preferred example, the body portion of the input gear assembly forms a container portion which encloses the differential gearset and/or the planetary gear set. A technical benefit may include a compact configuration which protects the differential gearset and/or the planetary gear set.

Optionally in some examples, including in at least one preferred example, the container portion is configured as a reservoir for storing lubricant for the differential gearset and/or the planetary gearset. A technical benefit may include improved lubrication of the differential gearset and/or the planetary gearset, e.g., by allowing lubricant to be stored in proximity of the differential gearset and/or the planetary gearset.

Optionally in some examples, including in at least one preferred example, the container portion comprises one or more openings for cooling the differential gearset and/or the planetary gearset, and/or for providing lubricant to the differential gearset and/or the planetary gearset. A technical benefit may include improved cooling and/or lubrication of the differential gearset and/or the planetary gearset. For example, the one or more openings may have an oblong shape extending in a direction along the common rotational axis. Other shapes are also feasible, such as but not limited to round shapes, e.g., circular holes and/or oval holes.

Optionally in some examples, including in at least one preferred example, the body portion of the input gear assembly comprises at least two parts releasably attached to each other, which are configured to allow the differential gearset and/or the planetary gearset to be inserted into the container portion in a direction along the common rotational axis when the at least two parts are disconnected. A technical benefit may include facilitated assembly and/or disassembly of the transmission arrangement. Another technical benefit may include a cost effective configuration, e.g., a reduced complexity of the at least two parts.

According to a second aspect of the disclosure, a powertrain for a vehicle is provided. The powertrain comprises the transmission arrangement according to any example the first aspect of the disclosure and a power unit drivingly connected to the input gearwheel. Advantages and effects of the second aspect of the disclosure are largely analogous to the advantages and effects of the first aspect of the disclosure. For example, the second aspect of the disclosure may seek to provide a compact and efficient powertrain for a vehicle.

Optionally in some examples, including in at least one preferred example, a rotational axis of the power unit is parallel with the common rotational axis or angled, such as perpendicular, with respect to the common rotational axis. A technical benefit of parallel axes may include a more compact configuration. A technical benefit of angled axes, such as perpendicular axes, may include improved packaging of the powertrain in a vehicle.

According to a third aspect of the disclosure, a vehicle is provided. The vehicle comprises the transmission arrangement according to any example of the first aspect of the disclosure and/or the powertrain according to any example of the second aspect of the disclosure. The vehicle further comprises at least one pair of drive wheels. Advantages and effects of the third aspect of the disclosure are largely analogous to the advantages and effects of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary transmission arrangement in a schematic view according to an example.
**FIGS. 3a****-c** are an exemplary transmission arrangement in schematic views when provided in different gear stages according to examples.
**FIG. 4** is an exemplary input gear assembly in a schematic view according to an example.
**FIGS. 5a****-b** are exemplary powertrains in schematic views according to examples.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

An object of the present disclosure is to provide an improved transmission arrangement for a vehicle which at least partly alleviates one or more drawbacks of the prior art, or which at least provides a suitable alternative. Other objects of the present disclosure are to provide an improved powertrain and a vehicle, which at least partly alleviate one or more drawbacks of the prior art, or which at least provide suitable alternatives. The transmission arrangement as disclosed herein may seek to provide a compact and efficient transmission arrangement for a vehicle. The configuration of the transmission arrangement as disclosed herein has shown to be advantageous for vehicle powertrains, such as for fully or at least partially electric powertrains.

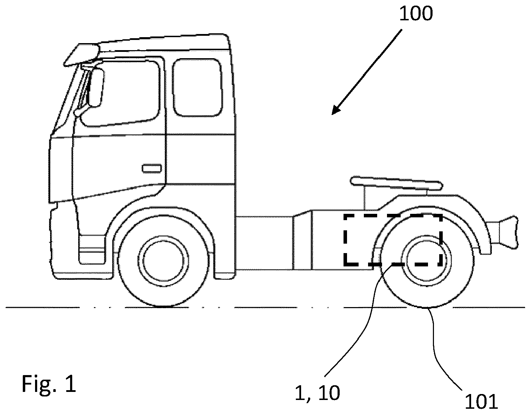

**FIG. 1** is an exemplary vehicle 100 in a side view according to an example. The vehicle 100 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc.

The vehicle 1 may as shown comprise a transmission arrangement 1 and/or a powertrain 10 according to examples of the present disclosure. The powertrain comprises a power unit (not shown) which is drivingly connected to drive wheels 101 via the transmission arrangement 1. More detailed examples of the transmission arrangement 1 and the powertrain 10 will be described in the below. The drive wheels 101 are in this example rear wheels of the vehicle 1. It shall however be noted that drive wheels may be provided at any other location, such as at the front of the vehicle. In other examples, drive wheels may be used for driving crawler members of the vehicle, e.g., of an excavator.

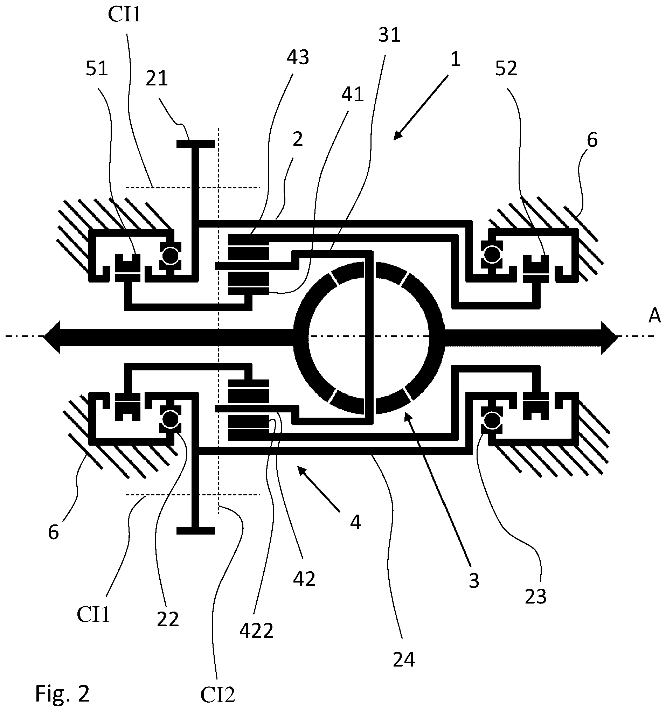

**FIG. 2** depicts an exemplary transmission arrangement 1 in a schematic view according to an example, which for example may form part of the vehicle 100 shown in FIG. 1.

The transmission arrangement 1 comprises an input gear assembly 2 comprising an input gearwheel 21 rotationally connected to a body portion 24 of the input gear assembly 2, wherein the input gearwheel 21 is configured to be drivingly connected to a power unit (not shown).

The transmission arrangement 1 further comprises a differential gearset 3 configured to be drivingly connected to drive wheels 101 as e.g., shown in FIG. 1.

The transmission arrangement 1 further comprises a planetary gearset 4 comprising a first planetary gear member 41, a second planetary gear member 42 and a third planetary gear member 43. In the shown example, the first planetary gear member 41 is a sun gearwheel of the planetary gearset 4, the second planetary gear member 42 is a planetary carrier of the planetary gearset 4 and the third planetary gear member 43 is a ring gearwheel of the planetary gearset 4. The planetary carrier 42 of the planetary gearset 4 carries a plurality of planetary gearwheels 422.

The transmission arrangement 1 further comprises at least one gear engaging member 51, 52 configured to provide at least two selectable gear ratios of the transmission arrangement 1. In the shown example, the transmission arrangement 1 comprises a first and a second gear engaging member 51, 52. Any one of the gear engaging members 51, 52 may be a toothed type gear engaging member, such as a dog clutch. Additionally, or alternatively, any one of the gear engaging members 51, 52 may be a friction clutch.

As shown, the input gear assembly 2, the differential gearset 3 and the planetary gearset 4 are coaxially arranged and configured to rotate with respect to a common rotational axis A. The common rotational axis A may correspond to a rotational axis of the above mentioned drive wheels 101. In the shown example, arrows along the common rotational axis A represents driving torque provided to the drive wheels 101, e.g., via half-shafts (not shown).

In addition, the input gear assembly 2 is drivingly connectable to the planetary gearset 4 via the at least one gear engaging member 51, 52. However, it shall be noted that in some examples only one gear engaging member may be used, such as any one of 51 or 52. In such example, the other gear engaging member may instead be replaced with a direct constant driving connection between the input gear assembly 2 and the planetary gearset 4.

As further shown, the planetary gearset 4 is drivingly connected to the differential gearset 3. More specifically, in the shown example, the planetary carrier 42 of the planetary gearset 4 is drivingly connected to the differential gearset 3, e.g., to a differential gearset planetary carrier 31. In some examples, as shown in FIG. 2, the differential gearset planetary carrier 31 and the second planetary gear member 42 may be formed as one single integral part.

Furthermore, the input gear assembly 2 is suspended by bearings 22, 23 provided on opposite sides of the differential gearset 3, as seen along the common rotational axis A. As shown in the example of FIG. 2, the bearings 22, 23 may further be provided on opposite sides of the planetary gearset 4, as seen along the common rotational axis A. A technical benefit may include that by the configuration of the transmission arrangement 1, where the input gear assembly 2 is suspended by bearings 22, 23 provided on opposite sides of the differential gearset 3, and optionally also on opposite sides of the planetary gearset 4, high bending stiffness is achieved for the input gear assembly 2, while also allowing a compact transmission configuration with at least two selectable gear ratios.

The bearings 22, 23 may be any kind of sliding or rolling bearing, such as a ball and/or roller bearing. For example, any one of the bearings 22, 23 may be a deep groove ball bearing, an angular contact ball bearing, a tapered roller bearing, or any other rolling bearing. As shown, the bearings 22, 23 are also arranged to rotate about the common rotational axis A. The bearings 22, 23 may thus be arranged to accommodate radial as well as axial loads in any direction along the common rotational axis A.

The planetary gearset 4 and the differential gearset 3 may as further shown be provided inside the body portion 24 of the input gear assembly 2.

The at least one gear engaging member 51, 52 may be configured to be provided in at least two different states, comprising a first state where it engages the input gear assembly 2 with an associated planetary gear member 41, 43 of the planetary gearset 4 and a second state where it engages the associated planetary gear member 41, 43 with a fixed member 6. In the shown example, the fixed member 6 is a housing, such as a housing fixed to a vehicle frame (not shown). As further shown, the bearings 22, 23 may be arranged between the fixed member 6 and the input gear assembly 2.

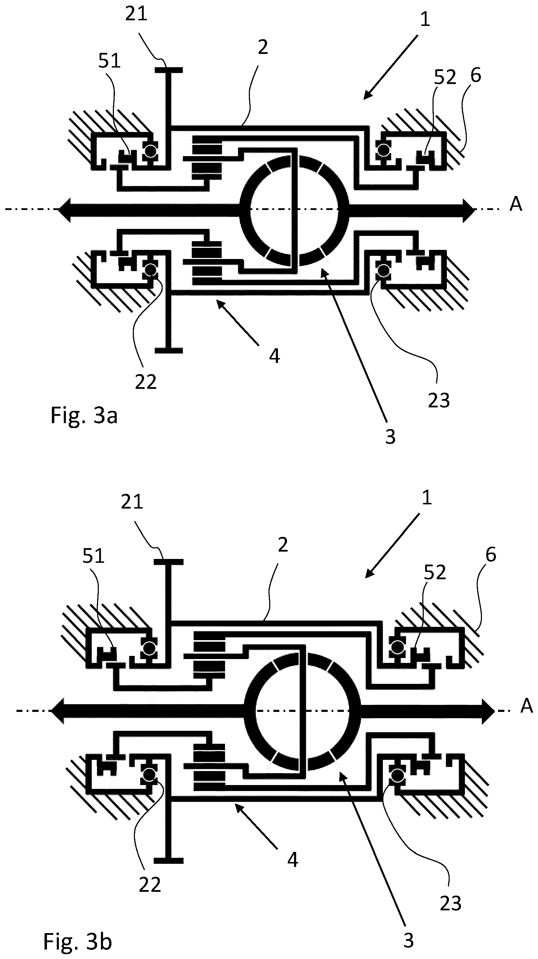

In the shown example, the first gear engaging member 51 and the second gear engaging member 52 are configured to provide three selectable gear ratios of the transmission arrangement 1. The three selectable gear ratios will be further described with reference to **FIGS. 3a****-c.** More specifically, FIGS. 3a-3c depict the transmission arrangement 1 in FIG. 1 when it is provided in different gear stages.

As shown, the first gear engaging member 51 may be configured to be provided in at least two different states, comprising a first state where it engages the input gear assembly 2 with the first planetary gear member 41 and a second state where it engages the first planetary gear member 41 with the fixed member 6. Additionally or alternatively, as further shown, the second gear engaging member 52 may be configured to be provided in at least two different states, comprising a first state where it engages the input gear assembly 2 with the third planetary gear member 43 and a second state where it engages the third planetary gear member 43 with the fixed member 6.

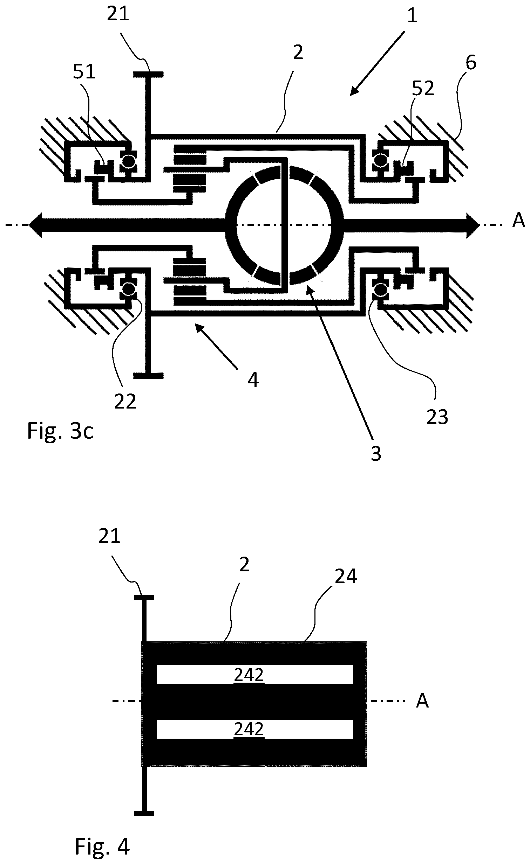

The three selectable gear ratios may be provided by selectively:
1) engaging the first planetary gear member 41 with the input gear assembly 2 by the first gear engaging member 51 and engaging the third planetary gear member 43 with the fixed member 6 by the second gear engaging member 52 (see FIG. 3a),
2) engaging the third planetary gear member 43 with the input gear assembly 2 by the second gear engaging member 52 and engaging the first planetary gear member 41 with the fixed member 6 by the first gear engaging member 51 (see FIG. 3b), and
3) engaging the first planetary gear member 41 with the input gear assembly 2 by the first gear engaging member 51 and engaging the third planetary gear member 43 with the input gear assembly 2 by the second gear engaging member 52 (see FIG. 3c).

The first and second gear ratios (FIGS. 3a-b) typically provide a first and a second respective speed reduction from the input gear assembly 2 to the drive wheels 101, and the third gear ratio is a direct 1:1 connection with no speed difference. Typically, the first gear ratio (FIG. 3a) provides a larger speed reduction than the second gear ratio (FIG. 3b).

The first and second gear engaging members 51, 52 may be controlled, i.e., moved axially back and forth along the common rotational axis A, by use of one or more actuators (not shown). The one or more actuators may be automatically controlled by a transmission control unit (not shown) and/or controlled based on input from a user, e.g., a driver of the vehicle 100. Respective shift forks (not shown) may further be provided in-between the first and second gear engaging members 51, 52 and the one or more actuators.

The transmission arrangement 1 may further be configured to prevent the first and second gear engaging members 51, 52 from being simultaneously engaged to the fixed member 6.

Additionally, or alternatively, the first gear engaging member 51 and the second gear engaging member 52 may be configured to be provided in a state where they are not engaging the input gear assembly 2 with the planetary gearset 4, and optionally also not engaging the planetary gearset 4 in any way with the fixed member 6. This state may correspond to a neutral state where no driving torque is transferrable to the drive wheels 101. Accordingly, this may allow the drive wheels 101 to roll freely, e.g., when driving downhill. An example of this state is shown in FIG. 2.

As further shown, the first and second gear engaging members 51, 52 may be provided on opposite sides of the differential gearset 3 and/or of the planetary gear set 4, as seen along the common rotational axis A.

As mentioned in the above, the differential gearset 3 may comprise a differential gearset planetary carrier 31, wherein the differential gearset planetary carrier 31 is rotationally connected to the second planetary gear member 42, e.g., integrated as mentioned in the above. Alternatively, the differential gearset planetary carrier and the second planetary gear member may be separate parts which are attached to each other, such as by one or more fasteners (not shown).

The input gearwheel 21 may be a separate member releasably attached to the body portion 24 of the input gear assembly 2 or integrated with the body portion 24 of the input gear assembly 2. For example, when the input gearwheel 21 is a separate member, the input gearwheel 21 may be attached to the body portion 24 via a connection interface CI1, as shown in FIG. 2 (indicated by dashed lines).

As may be gleaned from FIG. 2, the body portion 24 of the input gear assembly 2 may form a container portion 24 which encloses the differential gearset 3 and/or the planetary gear set 4. For example, the container portion 24 may be cylindrically shaped, with a center axis which corresponds to the common rotational axis A.

For example, the container portion 24 may be configured as a reservoir for storing lubricant for the differential gearset 3 and/or the planetary gearset 4.

The container portion 24 may additionally or alternatively comprise one or more openings 242 for cooling the differential gearset 3 and/or the planetary gearset 4, and/or for providing lubricant to the differential gearset 3 and/or the planetary gearset 4. An example of oblong openings 242 is shown in **FIG. 4** which depicts an example of the input gear assembly 2.

The body portion 24 of the input gear assembly 2 may comprise at least two parts releasably attached to each other, which are configured to allow the differential gearset 3 and/or the planetary gearset 4 to be inserted into the container portion 24 in a direction along the common rotational axis A when the at least two parts are disconnected. For example, as shown in FIG. 2, the at least two parts may be releasably attached to each other via a second connection interface CI2 (indicated by a dashed line), allowing the differential gearset 3 and/or the planetary gearset 4 to be inserted into the container portion 24 in the direction along the common rotational axis A when the at least two parts are disconnected.

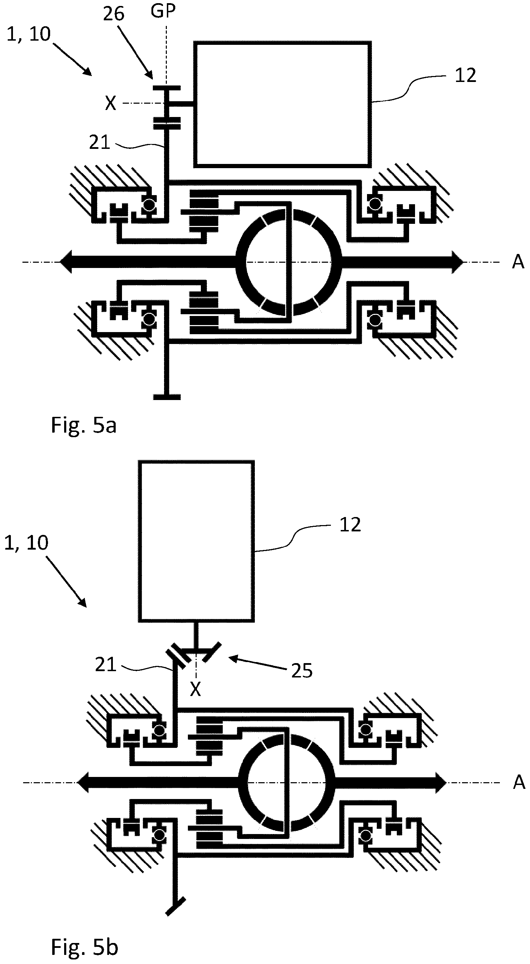

With reference to **FIGS. 5a****-b,** two respective examples of powertrains 10 according to the present disclosure are shown in schematic views. Each powertrain 10 may comprise a transmission arrangement 1 as e.g. shown in FIG. 2. Each powertrain 10 further comprises a power unit 12 which is drivingly connected to the input gearwheel 21.

The power unit 12 may be an electric motor for driving the drive wheels 101. Accordingly, in some examples, the powertrain 10 may be denoted an electric powertrain.

As shown in FIG. 5a, a rotational axis X of the power unit 12 may be parallel with the common rotational axis A. For example, the common rotational axis A may extend in a transverse direction of the vehicle 100, i.e., perpendicular to a longitudinal direction of the vehicle 100 corresponding to a travelling direction.

As shown in FIG. 5b, a rotational axis X of the power unit 12 may be angled with respect to the common rotational axis A. In the shown example, the rotational axis X of the power unit 12 is perpendicular to the common rotational axis A. For example, as shown in FIG. 5b, the driving connection between the power unit 12 and the input gearwheel 21 may be accomplished by use of a bevel gear assembly 25. Alternatively, as shown in FIG. 5a, the driving connection between the power unit 12 and the input gearwheel 21 may be accomplished by a gear assembly 26 comprising two gearwheels arranged in a common gear plane GP.

In some examples not shown, the input gear assembly may comprise more than one input gearwheel, e.g., allowing more than one power unit to be drivingly connected to the input gear assembly.

Even though the position of the input gearwheel 21 in e.g. FIG. 2 is to the left on the body portion 24, it shall be noted that the input gearwheel may be provided at any other position along the axial extension of the input gear assembly, such as to the right or in the middle of the body portion.

By the terms "rotationally connected" and "rotationally connects" is intended "connected for common rotation with".

By a "driving connection" between two rotating parts is herein intended that torque can be transmitted between the parts, and that the rotational speeds of the parts are proportional. When two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rotationally connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

In the following, possible features and feature combinations of the present disclosure are presented as a list of Examples:
Example 1: A transmission arrangement (1) for a vehicle (100), comprising:
   - an input gear assembly (2) comprising an input gearwheel (21) rotationally connected to a body portion (24) of the input gear assembly (2), wherein the input gearwheel (21) is configured to be drivingly connected to a power unit (12),
   - a differential gearset (3) configured to be drivingly connected to drive wheels (101),
   - a planetary gearset (4) comprising a first planetary gear member (41), a second planetary gear member (42) and a third planetary gear member (43), and
   - at least one gear engaging member (51, 52) configured to provide at least two selectable gear ratios of the transmission arrangement (1),
   wherein
   the input gear assembly (2), the differential gearset (3) and the planetary gearset (4) are coaxially arranged and configured to rotate with respect to a common rotational axis (A),
   the input gear assembly (2) is drivingly connectable to the planetary gearset (4) via the at least one gear engaging member (51, 52),
   the planetary gearset (4) is drivingly connected to the differential gearset (3), and
   the input gear assembly (2) is suspended by bearings (22, 23) provided on opposite sides of the differential gearset (3), as seen along the common rotational axis (A).
Example 2: The transmission arrangement (1) according to Example 1, wherein the bearings (22, 23) are further provided on opposite sides of the planetary gearset (4), as seen along the common rotational axis (A).
Example 3: The transmission arrangement (1) according to any one of the preceding Examples, wherein the planetary gearset (4) and the differential gearset (3) are provided inside the body portion (24) of the input gear assembly (2).
Example 4: The transmission arrangement (1) according to any one of the preceding Examples, wherein the at least one gear engaging member (51, 52) is configured to be provided in at least two different states, comprising a first state where it engages the input gear assembly (2) with an associated planetary gear member (41, 43) of the planetary gearset (4) and a second state where it engages the associated planetary gear member (41, 43) with a fixed member (6).
Example 5: The transmission arrangement (1) according to any one of the Examples 1-3, comprising a first gear engaging member (51) and a second gear engaging member (52) configured to provide three selectable gear ratios of the transmission arrangement (1).
Example 6: The transmission arrangement (1) according to Example 5, wherein the first gear engaging member (51) is configured to be provided in at least two different states, comprising a first state where it engages the input gear assembly (2) with the first planetary gear member (41) and a second state where it engages the first planetary gear member (41) with a fixed member (6), and/or wherein the second gear engaging member (52) is configured to be provided in at least two different states, comprising a first state where it engages the input gear assembly (2) with the third planetary gear member (43) and a second state where it engages the third planetary gear member (43) with a fixed member (6).
Example 7: The transmission arrangement (1) according to Example 6, wherein the three selectable gear ratios are provided by selectively:
   1) engaging the first planetary gear member (41) with the input gear assembly (2) by the first gear engaging member (51) and engaging the third planetary gear member (43) with the fixed member (6) by the second gear engaging member (52),
   2) engaging the third planetary gear member (43) with the input gear assembly (2) by the second gear engaging member (52) and engaging the first planetary gear member (41) with the fixed member (6) by the first gear engaging member (51), and
   3) engaging the first planetary gear member (41) with the input gear assembly (2) by the first gear engaging member (51) and engaging the third planetary gear member (43) with the input gear assembly (2) by the second gear engaging member (52).
Example 8: The transmission arrangement (1) according to any one of Examples 6 or 7, wherein the transmission arrangement (1) is configured to prevent the first and second gear engaging members (51, 52) from being simultaneously engaged to the fixed member (6).
Example 9: The transmission arrangement (1) according to any one of Examples 5-8, wherein the first and second gear engaging members (51, 52) are provided on opposite sides of the differential gearset (3) and/or of the planetary gear set (4), as seen along the common rotational axis (A).
Example 10: The transmission arrangement (1) according to any one of the preceding Examples, wherein the differential gearset (3) comprises a differential gearset planetary carrier (31), and wherein the differential gearset planetary carrier (31) is rotationally connected to the second planetary gear member (42).
Example 11: The transmission arrangement (1) according to Example 10, wherein the differential gearset planetary carrier (31) and the second planetary gear member (42) are formed as one single integral part.
Example 12: The transmission arrangement (1) according to any one of Examples 10 or 11, wherein the second planetary gear member (42) is a planetary carrier of the planetary gearset (4).
Example 13: The transmission arrangement (1) according to any one of the preceding Examples, wherein the input gearwheel (21) is a separate member releasably attached to the body portion (24) of the input gear assembly (2) or integrated with the body portion (24) of the input gear assembly (2).
Example 14: The transmission arrangement (1) according to any one of the preceding Examples, wherein the body portion (24) of the input gear assembly (2) forms a container portion (24) which encloses the differential gearset (3) and/or the planetary gear set (4).
Example 15: The transmission arrangement (1) according to Example 14, wherein the container portion (24) is configured as a reservoir for storing lubricant for the differential gearset (3) and/or the planetary gearset (4).
Example 16: The transmission arrangement (1) according to Example 14, wherein the container portion (24) comprises one or more openings (242) for cooling the differential gearset (3) and/or the planetary gearset (4), and/or for providing lubricant to the differential gearset (3) and/or the planetary gearset (4).
Example 17: The transmission arrangement (1) according to any one of Examples 14-16, wherein the body portion (24) of the input gear assembly (2) comprises at least two parts releasably attached to each other, which are configured to allow the differential gearset (3) and/or the planetary gearset (4) to be inserted into the container portion (24) in a direction along the common rotational axis (A) when the at least two parts are disconnected.
Example 18: A powertrain (10) for a vehicle (100) comprising the transmission arrangement (1) according to any one of the preceding Examples and a power unit (12) drivingly connected to the input gearwheel (21).
Example 19: The powertrain (10) according to Example 18, wherein a rotational axis (X) of the power unit (12) is parallel with the common rotational axis (A) or angled with respect to the common rotational axis (A).
Example 20: A vehicle (100) comprising the transmission arrangement (1) according to any one of Examples 1-17 and/or the powertrain (10) according to any one of Examples 18-19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A transmission arrangement (1) for a vehicle (100), comprising:
- an input gear assembly (2) comprising an input gearwheel (21) rotationally connected to a body portion (24) of the input gear assembly (2), wherein the input gearwheel (21) is configured to be drivingly connected to a power unit (12),
- a differential gearset (3) configured to be drivingly connected to drive wheels (101),
- a planetary gearset (4) comprising a first planetary gear member (41), a second planetary gear member (42) and a third planetary gear member (43), and
- at least one gear engaging member (51, 52) configured to provide at least two selectable gear ratios of the transmission arrangement (1),
wherein
the input gear assembly (2), the differential gearset (3) and the planetary gearset (4) are coaxially arranged and configured to rotate with respect to a common rotational axis (A),
the input gear assembly (2) is drivingly connectable to the planetary gearset (4) via the at least one gear engaging member (51, 52),
the planetary gearset (4) is drivingly connected to the differential gearset (3), and
the input gear assembly (2) is suspended by bearings (22, 23) provided on opposite sides of the differential gearset (3), as seen along the common rotational axis (A).

2. The transmission arrangement (1) according to claim 1, wherein the bearings (22, 23) are further provided on opposite sides of the planetary gearset (4), as seen along the common rotational axis (A).

3. The transmission arrangement (1) according to any one of the preceding claims, wherein the planetary gearset (4) and the differential gearset (3) are provided inside the body portion (24) of the input gear assembly (2).

4. The transmission arrangement (1) according to any one of the preceding claims, wherein the at least one gear engaging member (51, 52) is configured to be provided in at least two different states, comprising a first state where it engages the input gear assembly (2) with an associated planetary gear member (41, 43) of the planetary gearset (4) and a second state where it engages the associated planetary gear member (41, 43) with a fixed member (6).

5. The transmission arrangement (1) according to any one of the claims 1-3, comprising a first gear engaging member (51) and a second gear engaging member (52) configured to provide three selectable gear ratios of the transmission arrangement (1).

6. The transmission arrangement (1) according to claim 5, wherein the first gear engaging member (51) is configured to be provided in at least two different states, comprising a first state where it engages the input gear assembly (2) with the first planetary gear member (41) and a second state where it engages the first planetary gear member (41) with a fixed member (6), and/or wherein the second gear engaging member (52) is configured to be provided in at least two different states, comprising a first state where it engages the input gear assembly (2) with the third planetary gear member (43) and a second state where it engages the third planetary gear member (43) with a fixed member (6).

7. The transmission arrangement (1) according to claim 6, wherein the three selectable gear ratios are provided by selectively:
1) engaging the first planetary gear member (41) with the input gear assembly (2) by the first gear engaging member (51) and engaging the third planetary gear member (43) with the fixed member (6) by the second gear engaging member (52),
2) engaging the third planetary gear member (43) with the input gear assembly (2) by the second gear engaging member (52) and engaging the first planetary gear member (41) with the fixed member (6) by the first gear engaging member (51), and
3) engaging the first planetary gear member (41) with the input gear assembly (2) by the first gear engaging member (51) and engaging the third planetary gear member (43) with the input gear assembly (2) by the second gear engaging member (52).

8. The transmission arrangement (1) according to any one of claims 6 or 7, wherein the transmission arrangement (1) is configured to prevent the first and second gear engaging members (51, 52) from being simultaneously engaged to the fixed member (6).

9. The transmission arrangement (1) according to any one of claims 5-8, wherein the first and second gear engaging members (51, 52) are provided on opposite sides of the differential gearset (3) and/or of the planetary gear set (4), as seen along the common rotational axis (A).

10. The transmission arrangement (1) according to any one of the preceding claims, wherein the differential gearset (3) comprises a differential gearset planetary carrier (31), and wherein the differential gearset planetary carrier (31) is rotationally connected to the second planetary gear member (42).

11. The transmission arrangement (1) according to claim 10, wherein the second planetary gear member (42) is a planetary carrier of the planetary gearset (4).

12. The transmission arrangement (1) according to any one of the preceding claims, wherein the body portion (24) of the input gear assembly (2) forms a container portion (24) which encloses the differential gearset (3) and/or the planetary gear set (4).

13. The transmission arrangement (1) according to claim 12, wherein the body portion (24) of the input gear assembly (2) comprises at least two parts releasably attached to each other, which are configured to allow the differential gearset (3) and/or the planetary gearset (4) to be inserted into the container portion (24) in a direction along the common rotational axis (A) when the at least two parts are disconnected.

14. A powertrain (10) for a vehicle (100) comprising the transmission arrangement (1) according to any one of the preceding claims and a power unit (12) drivingly connected to the input gearwheel (21).

15. A vehicle (100) comprising the transmission arrangement (1) according to any one of claims 1-13 and/or the powertrain (10) according to claim 14.
